Europäisches Patentamt

European Patent Office

Office européen des brevets

(11) Publication number: **0 177 212**
**B1**

(12) **EUROPEAN PATENT SPECIFICATION**

(45) Date of publication of patent specification: **10.01.90**

(21) Application number: **85306556.3**

(22) Date of filing: **16.09.85**

(51) Int. Cl.⁵: **F 16 D 25/08**

(54) **An actuator for a motor vehicle clutch.**

(30) Priority: **20.09.84 US 653313**

(43) Date of publication of application:
**09.04.86 Bulletin 86/15**

(45) Publication of the grant of the patent:
**10.01.90 Bulletin 90/02**

(84) Designated Contracting States:
**DE FR GB IT**

(56) References cited:
**EP-A-0 119 784**
**DE-A-2 915 989**
**DE-A-3 021 386**
**GB-A-2 109 888**
**GB-A-2 112 490**
**GB-A-2 116 282**
**GB-A-2 116 283**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Leigh-Monstevens, Keith Vernon**
**5622 Larkins**
**Troy Michigan 48098 (US)**

(74) Representative: **Adkins, Michael et al**
**Withers & Rogers 4 Dyer's Buildings**
**Holborn London, EC1N 2JT (GB)**

Courier Press, Leamington Spa, England.

## Description

The present invention relates to an actuator for a motor vehicle clutch.

Slave cylinders for hydraulically operating the throw-out, or clutch release, bearing of mechanical diaphragm spring clutches, for example, are bolted to the mounting face of the transmission or gearbox housing, or are bolted or made integral with the clutch bell housing. Clutch hydraulic actuators mounted concentric to the driveshaft coupling the driven member of the friction clutch to the transmission input are disclosed in our EP—A—0119784 filed before but published after the application date of the present application.

In the above application, structures are disclosed for hydraulic control apparatus for mechanical clutches, adapted to be manufactured and assembled in the form of a complete system comprising a master cylinder, a hydraulic fluid reservoir, and a flexible line interconnecting the master cylinder to the slave cylinder, the hydraulic apparatus being prefilled with hydraulic fluid prior to shipment to a motor vehicle manufacturer for installation on a motor vehicle on the motor vehicle assembly line. In such a system a carrier is provided for the clutch release bearing, the bearing having a non-rotatable race and a rotatable race, the carrier being in the form of a sleeve disposed slidably over a tubular member surround a drive shaft connecting a clutch mechanism to a transmission and having an end in the form of a rim for housing the release bearing. A hydraulic actuator for a clutch is also described in GB—A—2,122,490. In GB—A—2,112,490, the actuator includes a carrier for a clutch release bearing, the carrier being in the form of a pressed tubular flange over which the bearing spigotally locates. The tubular flange provides only a narrow mounting surface which locates within the bearing. Also in GB—A—2,112,490 sliding surface of the actuator for the clutch become exposed during operation and an object of the present invention is to provide an improved form of actuator for a clutch.

Acording to the invention there is provided an actuator for a motor vehicle clutch including actuating means for transmitting movement to a release bearing carried by a tubular member characterised in that the release bearing is housed within a rim of the tubular member, and a protective cover is connected to the tubular member, one of the protective cover and rim having a resiliently deflectable retaining means engageable with the other of the protective cover and rim which enables the protective cover and rim to snap-fit together.

The housing of the release bearing within the rim provides a firm location for the bearing and the provision of the protective cover helps to protect sliding surfaces of the actuator.

In one embodiment said resiliently deflectable retaining means comprises at least one finger projecting from an edge of said protective cover, said finger having inwardly directed abutment means for engagement with said rim. The abutment means may include a ramp providing outward deflection of said finger upon snap-fitting the protective cover and rim together. An outwardly extending flange may be provided on the rim adjacent a surface of a non-rotating race of said release bearing, said flange having cut-out portions allowing said fingers to project therethrough, whereby said release bearing non-rotating race and rim are restrained against rotation. The or each finger may project from an edge of a rim of said protective cover to retain the rim of the tubular member within the rim of the protective cover.

In another embodiment, the protective cover is formed with a rim which receives the rim of said tubular member, the rims being connected by one-way interlocking means comprising at least one lug projecting from one of said rims and a corresponding recess formed in the other of said rims, said lug having an abutment surface and said recess having an edge whereby said lug abutment surface engages said recess edge after passage of said lug into said recess. The lug may have a ramp for aiding resilient deformation of at least one of said rims for enabling said lug to snap into said recess. Preferably, the rim of said tubular member is formed with resiliently deflectable retaining means comprising at least one chordal lip, said chordal lip being elastically deflectable outwardly for allowing the release bearing to be pressed within said rim of the tubular member. The chordal lip may have a ramp to aid in resiliently deflecting the chordal lip.

The actuating means may comprise an annular piston slidable in an annular cylinder, the cylinder being defined between a first tubular portion and a second tubular portion, said annular piston being arranged to displace the tubular member to release the clutch.

Embodiments of the invention will now be described by way of example with reference to the accompanying drawings in which:

Fig. 1 is a schematic representation of a clutch hydraulic control apparatus utilising an actuator according to the present invention,

Fig. 2 is a side elevation view of a portion of the slave cylinder,

Fig. 3 is a longitudinal section thereof along line 3—3 of Fig. 2,

Fig. 4 is a partial cross-section thereof on the plane of line 4—4 of Fig. 3,

Fig. 5 is a front elevation view thereof from line 5—5 of Fig. 2,

Fig. 6 is a view similar to Fig. 2 but showing a modification thereof with portions broken away to show a part of the internal structure;

Fig. 7 is a partial longitudinal section from line 7—7 of Fig. 6;

Fig. 8 is a front elevational view thereof from line 8—8 of Fig. 6; and

Fig. 9 is an exploded view of a portion of the structure illustrated at Figs. 6—8.

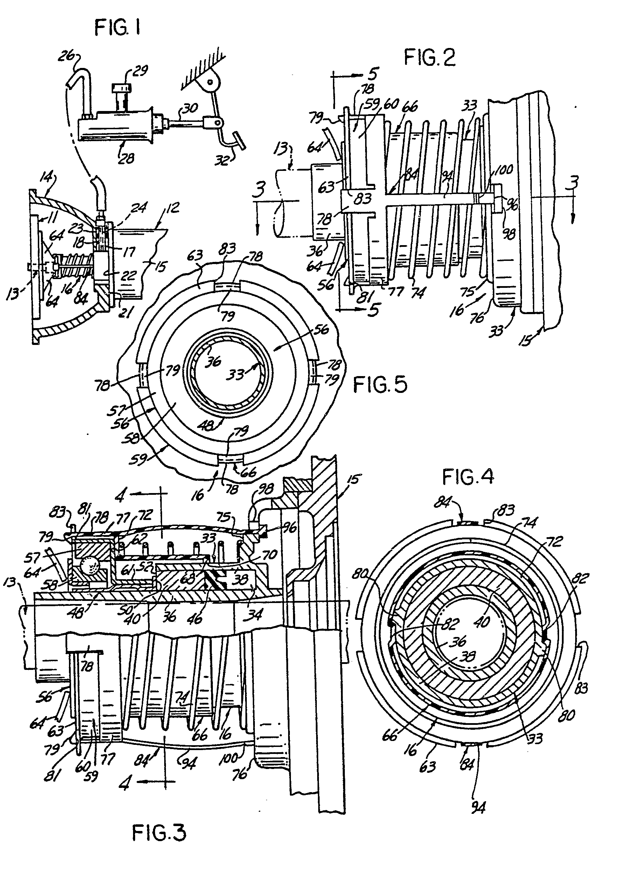

Referring to the drawing, and more particularly to Fig. 1, a motor vehicle transmission is schematically illustrated as comprising a friction clutch assembly 11 and a gearbox or transmission 12 enclosed in a casing 15. A driveshaft 13 drives the gearbox 12 from the clutch assembly 11. A bell housing 14, surrounding the clutch assembly 11, is bolted on the rear face of the motor vehicle engine, not shown. The rear face 21 of the bell housing 14 is bolted to the face 22 of the gearbox casing 15. An annular hydraulic slave cylinder 16 is disposed around the driveshaft 13 within the bell housing 14. In the example of structure illustrated, the slave cylinder 16 has a radially outwardly projecting portion or lug 17 which is disposed in a radial groove or channel 18 formed in the rear face 21 of the clutch bell housing 14 attached to the face 22 of the gearbox casing 15, such that the projecting portion or lug 17 is sandwiched between the face 21 of the bell housing 14 and the face 22 of the gearbox housing 15. A generally annular elastomeric collar 23 is placed around the projecting portion or lug 17 such as to securely hold the slave cylinder projecting portion or lug 17 in the groove or channel 18 in the bell housing face 21 and against the face 22 of the gearbox casing 15. A fluid passageway 24 runs the length of the projecting portion or lug 17 into the slave cylinder 16. The passageway 24 is connected via a hydraulic fluid conduit 26 to a master cylinder 28.

The master cylinder is provided with a built-in hydraulic fluid reservoir 29, in the example of structure illustrated, and has an input rod 30 pivotally connectd at an end to a clutch control pedal lever 32 installed within the driver compartment of a motor vehicle, not shown. The rod 30, as is well known, is connected to a piston, not shown, disposed in the master cylinder 28 for displacing the hydraulic fluid through the line 26 to the slave cylinder 16 when the clutch pedal lever 32 is depressed. The hydraulic fluid is displaced, through the passageway 24 in the slave cylinder radially projecting portion or lug 17, into the housing 33 of the slave cylinder 16 which is provided with an annular chamber 34, Fig. 3. The annular chamber 34 is formed between two concentric tubular portions 36 and 38 which are cast integral together with the projecting portion or lug 17, for example of cast aluminum in a single piece, in the example of structure illustrated.

An annular piston 40 is reciprocably and slidably disposed in the cylinder housing 33 between the two concentric tubular portions 36 and 38. An elastomeric V-shaped, in section, seal 46 is freely disposed in the annular chamber 34 above the annular piston 40, such as to prevent leakage of fluid from the annular chamber 34 past the piston 40.

A sleeve, or carrier, 48 is slidably disposed around the periphery of the inner tubular portion 36 of the cylinder housing 33. The sleeve 48 has a flanged end portion 50 freely engaged with the end face 52 of the piston 40. A thrust ball bearing 56 having an outer race 57 and an inner race 58 is mounted in a housing 59 having a tubular rim portion 60 disposed around the bearing outer race 57 and a reduced diameter tubular portion 61 disposed around the sleeve 48. The end of the bearing housing tubular portion 61 is engaged behind the flange end portion 50 of the sleeve 48. An integral flange 62 radially extends between the housing reduced diameter tubular portion 61 surrounding the sleeve 48 and the rim 60 disposed around the periphery of the bearing outer race 57. The edge of the rim 60 terminates in a curved upwardly extending flange 63.

The bearing outer race 57 is stationary and its rear face engages the housing flange 62 and, in some structures, the periphery of the bearing outer race 57 is press-fitted within the housing rim 60. In other structures, permitting the bearing 56 to float within the housing 59, means are provided for allowing the bearing outer race 57 to be displaced laterally within the housing 59, an appropriate clearance being provided between the peripheral surface of the outer race 57 and the inner surface of the rim 60, the outer race 57 being prevented from rotating relatively to the housing 59 by way of any convenient arrangements, such as by coupling the rear face of the outer race 57 to the housing flange 62 frictionally or by means of the splines and grooves, not shown. The inner race 58 (rotatable race) of the throw-out or release bearing 56 is arranged to engage the end of the clutch release fingers 64 such that when the throw-out bearing 56 is displaced to the left from the position indicated at Fig. 3, the clutch 11, Fig. 1 is released.

A dust cover 66 is disposed surrounding the tubular portion 61 of the bearing housing 59 and a portion of the peripheral surface of the outer tubular portion 38 of the cylinder housing 33. The dust cover 66 is generally cylindrical in shape and is molded of plastic such as nylon. One end of the dust cover 66 is formed with an inwardly radially projecting flange or lip 68 having an inner edge 70 in sliding engagement with the peripheral surface of the cylinder outer tubular portion 38. The other end of the dust cover 66 has an outwardly projecting flange portion 72 abutting against the flange 62 of the bearing housing 59. A coil spring 74 is held in compression between the flange portion 72 of the dust cover 66 and an annular abutment 75 formed on a radially outwardly extending flange portion 76 of the cylinder housing 33.

The dust cover 66 has a rim or collar 77 formed integrally at the periphery of the flange portion 72 and partly surrounding the outer rim 60 of the bearing housing 59, Figs. 2 and 3. A plurality of integral fingers 78 project from the edge of the dust cover rim 77. Each finger 78 is provided at its tip with a hook-like structure consisting of a ramp portion 79 provided inwardly with a radially extending abutment surface 81. The bearing housing 59 is held within the dust cover rim 77 by pressing the bearing housing 59 within the rim 77 of the dust cover 66, the ramps 79 at the tip of the fingers 78 through engagement with the edge between the flange 62 of the bearing housing 59 and the rim 60 causing outward resilient deflection of the fingers 78, until the tips of the fingers are passed through cut-out portions 83 in the curved flange 63 of the housing rim 60, at which time the fingers 78 snap back to their original position causing the tip abutments 81 to engage behind the bottom edge of the cut-out portions 83 in the bearing housing end flange 63. In this manner, the bearing housing 59 is held within the end rim 77 of the dust cover 66 and is prevented from rotating relative to the dust cover 66 as a result of the fingers 78 projecting through the flange cut-out portion 83. The bearing housing 59 is prevented from escaping from within the dust cover rim 77, as a result of the interference provided by the finger tip abutments 81.

As best shown at Fig. 4, the slave cylinder housing 33 has a pair of diametrically arranged outwardly projecting lugs 80 disposed at the end of the outer tubular portion 38 of the slave cylinder housing 33. During assembly of the slave cylinder 16, the lugs 80 are engaged below the dust cover 66 by snapping the edge lip 68 of the dust cover over the outwardly projecting lugs 80. The dust cover 66 is provided with a pair of diametrically disposed longitudinal projections, in the form of inwardly directed U-shaped channels or dimples 82, which limit the permissible rotation of the dust cover 66 relative to the cylinder casing 33 to a maximum of 180° as a result of lateral abutment of the U-channel or dimple sidewall with a side of the lugs 80.

The dust cover 66, in addition to acting as a seal preventing introduction of dirt below the dust cover, acts as a retainer preventing travel of the sleeve 48 and the housing 59 of the throw-out bearing 56, after assembly of the slave cylinder 16, beyond the limits defined by the inner face of the dust cover lip 68 engaging the lugs 80 outwardly projecting from the cylinder housing 33, under the urging action of the compressed coil spring 74. The coil spring 74 is relatively weak and, functionally, operates only to urge the revolving race 58 of the throw-out bearing 56 constantly in engagement with the end of the fingers 64 of the clutch release mechanism, after installation of the slave cylinder 16 in a motor vehicle transmission train.

A restraining strap, designated generally at 84, is provided in some structures for retracting the throw-out bearing 56 to the position shown at Fig. 3, after assembly of the slave cylinder 16, against the action of the compressed coil spring 74. The restraining strap 84 holds the throw-out bearing 56 in a retracted position during filling of the hydraulic system with hydraulic fluid, during shipment to a motor vehicle manufacturer and during assembly of the hydraulic clutch release system on a motor vehicle on the assembly line.

In the example of structure illustrated, the restraining strap 84 and the dust cover 66 are molded in a single piece. A pair of bands or strips 94, Figs. 2—4, are integrally molded with and extend from the dust cover rim or collar 77, the free end of each band or strip 94 terminating in an integral strut 96 disposed transversely at right angle to the axis of the band or strip 94 and permitting attaching the end of each band or strip 94 to the slave cylinder housing 33. The slave cylinder housing 33 is provided with a pair of T-slots 98 diametrically disposed on the front face of the housing flange portion 76. Each band or strip 94 of the restraining strap 84 is provided with a weakened portion 100, which may be a portion of reduced thickness as will be the result of forming a V-groove, as shown, on the surface of the band or strip 94, or a portion of reduced width, or both. After installation of the apparatus of the invention in a motor vehicle, and upon first actuation of the slave cylinder 16, hydraulic fluid displaced from the master cylinder 28 to the annular chamber 34 in the slave cylinder casing 33, Fig. 3, causes displacement of the seal 46 and piston 40, and displacement of the throw-out bearing 56 as a result of the coupling between the piston 40 and the throw-out bearing through the sleeve 48 and the bearing housing 59, with the result that the bands or strips 94 are broken at their weakened portion 100, thus releasing dust cover 66, alia bearing carrier, and the throw-out bearing 60 for normal operation by the slave cylinder 16.

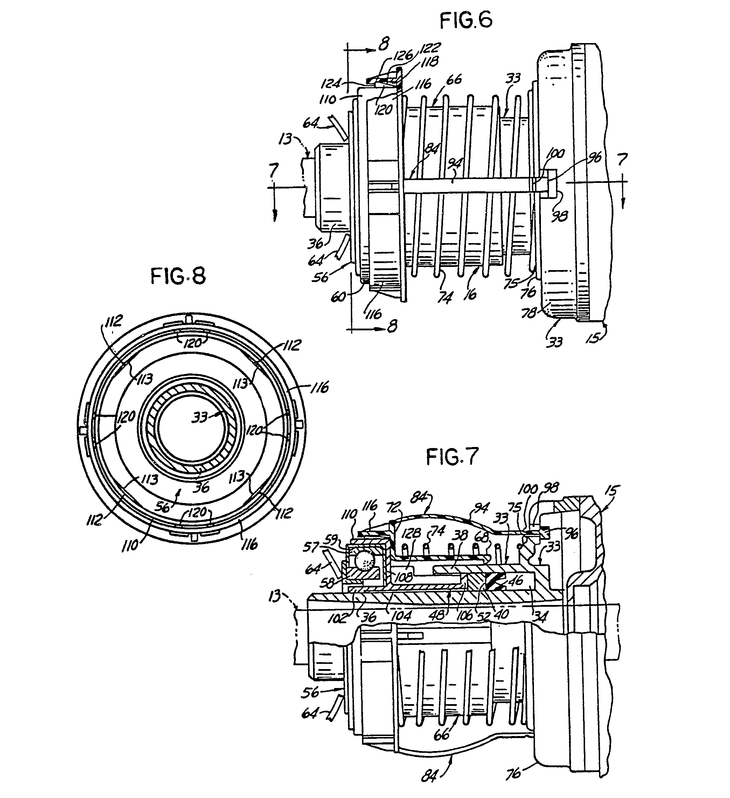

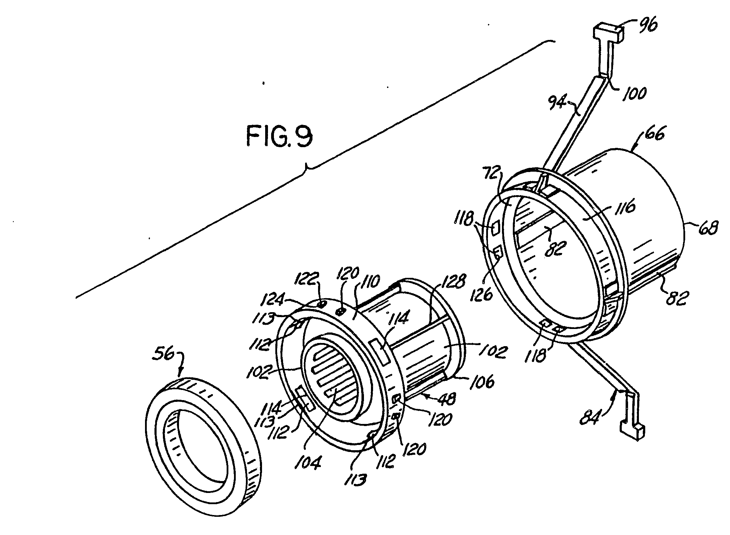

The structure of the casing 33 of the slave cylinder 16 of Figs. 6—8 is identical to that of Figs. 2—5, i.e. the casing 33 is made of a single-piece casting, with integral concentric tubular portions 36 and 38. Motions of the annular piston 40 are transmitted to the throw-out bearing 56 by means of a single-piece molded sleeve or carrier 48 made of plastic, such as nylon for example. The carrier 48 has a tubular body 102, preferably provided with longitudinal grooves on a portion of its internal surface, as shown at 104, forming lubricant reservoirs and decreasing the internal surface area of the carrier tubular body 102 in sliding engagement with the peripheral surface of the cylinder inner tubular portion 36. The carrier tubular body 102 has, at an end, an outwardly projecting flange 106 of relatively small diameter abutting against the annular outer end face 52 of the piston 40. The throw-out bearing 56 is supported from the carrier 48, at the other end of the carrier tubular body 102, by way of a radially outwardly extending integral flange 108 having a forwardly extending rim 110 in which is nested the housing 59 of the throw-out bearing 56. A plurality of chordal ribs or lips 112, best shown at Figs. 8 and 9, are integrally formed at the edge of the carrier rim 110, extending generally parallel to, and spaced apart from the flange 108 of the carrier 48 for holding the bearing housing 59 nested within the rim 110 between the chordal lips 112 and the flange 108, the chordal lips 112 having each a ramp 113 to aid in resiliently deflecting the chordal lips 112 outwardly when the bearing housing 59 is pushed into the carrier rim 110. The rim 110 has cut-out portions 114, Fig. 9, for improving the elasticity of the chordal lips 112 resiliently deflected outwardly to enable passage of the bearing housing 59 therebetween into the rim 110.

In the structure of Figs. 6—9, the dust cover 66 and the restraining strap 84 are also formed integrally of a single-piece plastic molding. The dust cover 66 is provided at one end with an annular rim or collar 116 adapted to snap over the rim of the carrier 48. For that purpose, the interior surface of the dust cover rim 116 has several pairs, four pairs in the example of structure illustrated, of recesses 118, best shown at Fig. 9, adapted to snap over corresponding projecting lugs 120 molded integral on the peripheral surface of the carrier rim 110. In this manner, the dust cover 66 is coupled to the carrier 48 by disposing the cylindrical body portion 102 of the carrier 48 within the dust cover and pressing the dust cover rim 116 over the carrier rim 110, each of the lugs 120 on the peripheral surface of the carrier rim 112 registering with a recess 118 within the rim 116 of the dust cover 66. The projecting lugs 120 are each provided with a rearward directed ramp portion 122 aiding in progressively deflecting the edge of the dust cover rim 116 outwardly and elastically deflecting inwardly the carrier flange 110 proximate the lugs 120 until each lug 120 snaps into one of the recesses 118 in the interior surface of the dust cover rim 116. Each lug 120 has a frontal abutment 124 engageable with an edge 126, Fig. 6, of each recess 118, such that uncoupling of the dust cover 66 and carrier 48 is prevented. When the dust cover 66 and the carrier 48 are coupled together, the flange 108 of the carrier 48 is in engagement with the flange 72 of the dust cover.

A plurality of longitudinal ribs 128 extending between the carrier flanges 106 and 108, on the periphery of the body 102 of the carrier 48 are for the purpose of increasing the rigidity of the carrier and of absorbing most of the load imposed on the body 102 of the carrier during release of the clutch mechanism, when the slave cylinder piston 40 is displaced leftwardly, as seen in Fig. 7, for displacing the throw-out bearing 56 to the clutch release position.

**Claims**

1. An actuator for a motor vehicle clutch including actuating means (40) for transmitting movement to a release bearing (56) carried by a tubular member (61; 48) characterised in that the release bearing is housed within a rim (60; 110) of the tubular member (61; 48), and a protective cover is (66) connected to the tubular member, one of the protective cover (66) and rim (60; 110) having a resiliently deflectable retaining means (78; 118) engageable with the other of the protective cover and rim which enables the protective cover and rim to snap-fit together.

2. An actuator according to Claim 1 characterised in that said resiliently deflectable retaining means comprises at least one finger (78) projecting from an edge of said protective cover (66) said finger having inwardly directed abutment means (79, 81) for engagement with said rim (60).

3. An actuator according to Claim 2 characterised in that said abutment means includes a ramp (79) providing outward deflection of said finger (78) upon snap-fitting the protective cover (66) and rim (60) together.

4. An actuator according to Claim 2 or 3 characterised in that an outwardy extending flange (63) is provided on the rim adjacent a surface of a non-rotating race of said release bearing, said flange (63) having cut-out portions (83) allowing said fingers (78) to project therethrough, whereby said release bearing non-rotating race (57) and rim (60) are restrained against rotation.

5. An actuator according to Claim 2, 3 or 4 characterised in that the or each finger (78) projects from an edge of a rim (77) of said protective cover (66) to retain the rim (60) of the tubular member (61; 48) within the rim of the protective cover (66).

6. An actuator according to Claim 1 characterised in that the protective cover (66) is formed with a rim (116) which receives the rim (110) of said tubular member (49), the rims being connected by one-way interlocking means comprising at least one lug (120) projecting from one of said rims (110) and a corresponding recess (118) formed in the other of said rims (116), said lug (120) having an abutment surface (124) and said recess having an edge (126) whereby said lug abutment surface engages said recess edge after passage of said lug into said recess.

7. An actuator according to Claim 6 characterised in that the said lug (120) has a ramp (122) for aiding resilient deformation of at least one of said rims (116) for enabling said lug to snap into said recess (118).

8. An actuator according to Claim 6 or 7 characterised in that the rim (116) of said tubular member (48) is formed with resiliently deflectable retaining means comprising at least one chordal lip (112), said chordal lip being elastically deflectable outwardly for allowing the release bearing (56) to be pressed within said rim (116) of the tubular member (48).

9. An actuator according to Claim 8 characterised in that said chordal lip (112) has a ramp (113) to aid in resiliently deflecting the chordal lip.

10. An actuator according to any preceding claim characterised in that the actuating means comprises an annular piston (40) slidable in an annular cylinder (34), the cylinder being defined between a first tubular portion (36) and a second tubular portion (38), said annular piston being arranged to displace the tubular member (61, 48) to release the clutch.

**Patentansprüche**

1. Betätigungsvorrichtung für eine Kraftfahrzeugkupplung, mit einer Betätigungseinrichtung (40) zum Übertragen einer Bewegung auf ein Ausrücklager (56), das von einem rohrförmigen Teil (61; 48) getragen wird, dadurch gekennzeichnet, daß das Ausrücklager innerhalb eines Randes (60; 110) des rohrförmigen Teiles (61; 48) untergebracht it und ein Schutzmantel (66) mit dem rohrförmigen Teil verbunden ist, wobei einer der aus Schutzmantel (66) und Rand (60; 110) bestehenden Teile eine elastisch verformbare Halteeinrichtung (78; 118) hat, die mit dem anderen der aus Schutzmantel und Rand bestehenden Teile in Eingriff bringbar ist und es dem Schutzmantel und dem Rand gestattet, ineinander einzuschnappen.

2. Betätigungsvorrichtung nach Anspruch 1, dadurch gekennzeichnet, daß die elastisch verformbare Halteeinrichtung mindestens einen Finger (78) aufweist, der von einer Kante des Schutzmantels (66) vorsteht, wobei der Finger eine nach innen gerichtete Anschlageinrichtung (79, 81) zum Eingriff mit dem Rand (60) hat.

3. Betätigungsvorrichtung nach Anspruch 2, dadurch gekennzeichnet, daß die Anschlageinrichtung eine Rampe (79) aufweist, die eine Auswärtsverformung des Fingers (78) beim Ineinanderschnappen des Schutzmantels (66) und des Randes (60) liefert.

4. Betätigungsvorrichtung nach Anspruch 2 oder 3, dadurch gekennzeichnet, daß ein sich nach außen erstreckender Flansch (63) an dem Rand angrenzend an eine Oberfläche einer sich nicht drehenden Laufbahn des Ausrücklagers vorgesehen ist, wobei der Flansch (63) Ausschnitte (83) hat, so daß die Finger (78) hindurchgestreckt werden können, wodurch die sich nicht drehende Laufbahn (57) des Ausrücklagers und der Rand (60) gegen eine Drehung zurückgehalten werden.

5. Betätigungsvorrichtung nach Anspruch 2, 3 oder 4, dadurch gekennzeichnet, daß der oder jeder Finger (78) von einer Kante eines Randes (77) des Schutzmantels (66) vorsteht, um den Rand (60) des rohrförmigen Teiles (61; 48) innerhalb des Randes des Schutzmantels (66) zu halten.

6. Betätigungsvorrichtung nach Anspruch 1, dadurch gekennzeichnet, daß der Schutzmantel (66) mit einem Rand (116) ausgebildet ist, der den Rand (110) des rohrförmigen Teiles (49) aufnimmt, wobei die Ränder durch eine Einwegsperreinrichtung verbunden sind, die mindestens eine Nase (120), die von einem der Ränder (110) wegragt, und eine entsprechende Ausnehmung (118), die in dem anderen der Ränder (116) gebildet ist, aufweist, wobei die Nase (120) eine Anschlagfläche (124) hat und die Ausnehmung eine Kante (126) hat, wodurch die Nasenanschlagfläche an der Ausnehmungskante nach dem Durchgang der Nase in die Ausnehmung angreift.

7. Betätigungsvorrichtung nach Anspruch 6, dadurch gekennzeichnet, daß die Nase (120) eine Rampe (122) hat, um die elastische Verformung von mindestens einem der Ränder (116) zu unterstützen, so daß die Nase in die Ausnehmung (118) schnappen kann.

8. Betätigungsvorrichtung nach Anspruch 6 oder 7, dadurch gekennzeichnet, daß der Rand (116) des rohrförmigen Teiles (48) mit einer elastisch verformbaren Halteeinrichtung ausgebildet ist, die mindestens eine sehnenförmige Lippe (112) aufweist, wobei die sehnenförmige Lippe nach außen elastisch verformbar ist, so daß das Ausrücklager (56) in den Rand (116) des rohrförmigen Teiles (48) eingepreßt werden kann.

9. Betätigungsvorrichtung nach Anspruch 8, dadurch gekennzeichnet, daß die sehnenförmige Lippe (112) eine Rampe (113) hat, um beim elastischen Verformen der sehnenförmigen Lippe zu helfen.

10. Betätigungsvorrichtung nach irgendeinem vorhergehenden Anspruch, dadurch gekennzeichnet, daß die Betätigungseinrichtung einen ringförmigen Kolben (40) hat, der in einem ringförmigen Zylinder (34) verschiebbar ist, wobei der Zylinder zwischen einem ersten rohrförmigen Teil (36) und einem zweiten rohrförmigen Teil (38) gebildet ist, wobei der ringförmige Kolben dafür ausgebildet ist, das rohrförmige Teil (61, 48) zu verschieben, um die Kupplung auszurücken.

**Revendications**

1. Organe de manoeuvre d'embrayage d'un véhicule à moteur, comprenant un dispositif de manoeuvre (40) destiné à transmettre un mouvement à un roulement (56) de débrayage porté par un organe tubulaire (61, 48), caractérisé en ce que le roulement de débrayage est logé dans un anneau (60; 110) de l'organe tubulaire (61; 48), et un couvercle protecteur (66) est raccordé à l'organe tubulaire, l'un du couvercle protecteur (66) ou de l'anneau (60; 110) ayant un dispositif de retenue (78; 118) qui peut fléchir élastiquement et qui est destiné à coopérer avec l'autre de l'anneau ou du couvercle protecteur respectivement, si bien que le couvercle protecteur et l'anneau peuvent coopérer par enclenchement élastique.

2. Organe de manoeuvre selon la revendication 1, caractérisé en ce que le dispositif de retenue qui peut fléchir élastiquement comporte au moins un doigt (78) dépassant d'un bord du couvercle protecteur (66), le doigt ayant une butée (79, 81) qui est dirigée vers l'intérieur et qui est destinée à être au contact de l'anneau (60).

3. Organe de manoeuvre selon la revendication 2, caractérisé en ce que la butée comprend une rampe (79) assurant un fléchissement vers l'extérieur du doigt (78) lors du montage du couvercle protecteur (66) sur l'anneau (60) par enclenchement élastique.

4. Organe de manoeuvre selon la revendication 2 ou 3, caractérisé en ce qu'un flasque (63) dépassant vers l'extérieur est placé sur l'anneau près d'une surface d'une bague non rotative du roulement de débrayage, le flasque (63) ayant des parties découpées (83) permettant le passage des doigts (78) si bien que la bague non rotative (57) du roulement de débrayage et l'anneau (60) ne peuvent pas tourner.

5. Organe de manoeuvre selon la revendication 2, 3 ou 4, caractérisé en ce que le doigt ou chaque doigt (78) dépasse d'un bord d'un anneau (77) du couvercle protecteur (66) afin que l'anneau (60) de l'organe tubulaire (61; 48) soit retenu dans l'anneau du couvercle protecteur (66).

6. Organe de manoeuvre selon la revendication 1, caractérisé en ce que le couvercle protecteur (66) est réalisé avec un anneau (116) qui loge l'anneau (110) de l'organe tubulaire (49), les anneaux étant raccordés par un dispositif unidirectionnel d'em-

boîtement comprenant au moins une patte (120) dépassant de l'un des anneaux (110) et une cavité correspondante (118) formée dans l'autre des anneaux (116), la patte (120) ayant une surface de butée (124) et la cavité ayant un bord (126), la surface de butée de la patte étant au contact du bord de la cavité après passage de la patte dans la cavité.

7. Organe de manoeuvre selon la revendication 6, caractérisé en ce que la patte (120) a une rampe (122) destinée à faciliter la déformation élastique de l'un des anneaux (116) au moins afin que la patte puisse s'enclencher élastiquement dans la cavité (118).

8. Organe de manoeuvre selon la revendication 6 ou 7, caractérisé en ce que l'anneau (116) de l'organe tubulaire (48) est formé avec un dispositif de retenue qui peut fléchir élastiquement et qui comporte au moins une lèvre (112) disposée suivant une corde, la lèvre pouvant fléchir élastiquement vers l'extérieur afin qu'elle permette l'appui du roulement de débrayage (56) dans l'anneau (116) de l'organe tubulaire (48).

9. Organe de manoeuvre selon la revendication 8, caractérisé en ce que la lèvre (112) a une rampe (113) destinée à faciliter son fléchissement élastique.

10. Organe de manoeuvre selon l'une quelconque des revendications précédentes, caractérisé en ce que le dispositif de manoeuvre comporte un piston annulaire (40) qui peut coulisser dans un cylindre annulaire (34), le cylindre étant délimité entre une première partie tubulaire (36) et une seconde partie tubulaire (38), le piston annulaire étant disposé afin qu'il déplace l'organe tubulaire (61, 48) et assure le débrayage.

EP 0 177 212 B1

FIG. 1

FIG. 2

FIG. 5

FIG. 4

FIG. 3

1

EP 0 177 212 B1

FIG.6

FIG.8

FIG.7

2

FIG.9